# EUROPEAN PATENT APPLICATION

(11) **EP 4 580 312 A1**
(43) Date of publication of application: **02.07.2025**
(21) Application number: 24222932.6
(22) Date of filing: 23.12.2024
(51) Int. Cl.: H05B 1/02, B60R 21/015, B62D 1/06, B60N 2/00, B60N 2/56

(54) **CIRCUIT, DETECTION SYSTEM, AND DEVICE**

(30) Priority: 25.12.2023 CN 202311799927
(71) Applicant: Yanfeng International Automotive Technology Co., Ltd., Shanghai 201306 (CN)
(72) Inventor: WANG, Panpan, Shanghai 201315 (CN)
(74) Representative: Reitstötter Kinzebach

(57) **Abstract**

The present disclosure relates to a circuit, a detection system, and a device. The circuit is configured to couple with a heating and sensing unit to control the heating and sensing unit to perform a sensing function at a first time and a heating function at a second time. The circuit includes: a high-side driver, a signal processing unit, and a switch unit. A first terminal of the switch unit is grounded, a second terminal of the switch unit is connected to an output terminal of the high-side driver, and a third terminal of the switch unit is connected to the signal processing unit. When the heating and sensing unit performs the sensing function, the signal processing unit controls the switch unit to be turned on, so as to ground the output terminal of the high-side driver. The circuit bypasses a capacitance on the high-side driver side, thereby reducing the impact of battery voltage fluctuations and power line conducted noise immunity in experimental scenarios on the capacitance changes in the sensing detection channel, and improving detection accuracy as well as the stability, reliability, and safety of related products.

## Description

### FIELD OF THE DISCLOSURE

The present disclosure relates to the technical field of detection, and more specifically to a circuit, a detection system and a device.

### BACKGROUND

To enhance the driving safety of vehicles, hands on/off detection (HOD) technology has been widely applied in many vehicles. In an existing design of steering wheel, an HOD module and a heating wire of a steering wheel are independently arranged, and a shielding layer is provided therebetween to shield influence of the heating wire on the HOD module. Such design has high requirements for the internal space of the steering wheel, and requires at least three structural layers (MAT), leading to higher costs. Another existing design is to integrate the heating function into the HOD module, allowing a metal wire to be switchable between a sensing state and a heating state, thereby saving the internal space of the steering wheel and significantly reducing the material and manufacturing costs of the steering wheel. However, integrating the heating and sensing functions requires to use circuits for rapid time-shared control of the metal wire to perform the heating or sensing function, which involves the following technical challenges. When the heating function is turned on/off or when the application of the transient conducted interference (CI Pulse, a type of automotive electronic interference test) simulating the power-cord interference of the entire vehicle causes voltage pulsation in the heating power supply, there will be fluctuations in the Rawdata representing changes in capacitance, and the amplitude of these fluctuations is similar to that caused by human touch. Such fluctuations pose a challenge for accurately identifying changes in capacitance caused by human touch, and may result in the mistriggering of related functions, thereby reducing the driving safety of vehicle.

In addition, other than the HOD module, other products that integrate heating and sensing functions and use circuits to switch between the heating and sensing functions via time-shared control also involve similar issues.

### SUMMARY

In view of the aforementioned disadvantages in the prior art, the present disclosure provides a circuit, a detection system, and a device. In this circuit, a capacitance on a high-side driver side is bypassed by short-circuiting an output terminal of a high-side driver to ground when a heating and sensing unit performs a sensing function. Such configuration reduces the impact of switching between the heating and sensing functions on capacitance changes in a sensing detection channel, thereby improving detection accuracy as well as the stability, reliability, and safety of related products.

According to a first aspect of the present disclosure, a circuit is proposed, which is configured to couple with a heating and sensing unit to control the heating and sensing unit to perform a sensing function at a first time and a heating function at a second time. The circuit includes: a high-side driver, a signal processing unit, and a switch unit. A first terminal of the switch unit is grounded, a second terminal of the switch unit is connected to an output terminal of the high-side driver, and a third terminal of the switch unit is connected to the signal processing unit. When the heating and sensing unit performs the sensing function, the signal processing unit controls the switch unit to be turned on, so as to ground the output terminal of the high-side driver.

According to the first aspect mentioned above, any of the following preferred features can be included individually or in combination.

Preferably, the circuit includes an overcurrent protection unit. A first terminal of the overcurrent protection unit is grounded, a second terminal of the overcurrent protection unit is connected to a control terminal of the high-side driver, and a third terminal of the overcurrent protection unit is connected to the third terminal of the switch unit. The overcurrent protection unit is configured to shut down the output of the high-side driver to implement overcurrent protection when the heating and sensing unit performs the heating function but the switch unit is turned on abnormally.

Preferably, the circuit includes a reverse-connection prevention unit connected in series between the switch unit and the ground. A control terminal of the reverse-connection prevention unit is configured to connect to a switchable power supply. The reverse-connection prevention unit is configured to disconnect in case of reverse connection of the power supply to implement reverse connection prevention.

Preferably, the switch unit, the overcurrent protection unit, and/or the reverse-connection prevention unit are metal-oxide-semiconductor field-effect transistors (MOSFETs).

Preferably, the circuit includes a plurality of sensing detection channels, each of which includes a high-side electrical isolation transistor and a low-side electrical isolation transistor. A sum of an output capacitance under a direct current bias voltage of all transistors and other parasitic capacitance in the plurality of sensing detection channels is less than an upper limit of load capacity of the signal processing unit.

Preferably, the sum of the output capacitance under a direct current bias voltage of all transistors and other parasitic capacitance in the plurality of sensing detection channels is less than 60% of the upper limit of load capacity of the signal processing unit.

Preferably, each of the high-side electrical isolation transistors is a P-type field-effect transistor. All of these P-type field-effect transistors are reversely connected to block potential paths via the body diode thereof to the source thereof. A control terminal of each P-type field-effect transistor is grounded via a resistor.

Preferably, each of the low-side electrical isolation transistors is an N-type field-effect transistor, and a control terminal of each N-type field-effect transistor is connected to the signal processing unit.

Preferably, the switch unit is an N-type field-effect transistor.

According to a second aspect of the present disclosure, a detection system is proposed, which includes the aforementioned circuit and a heating and sensing unit coupled to the circuit. The circuit controls the heating and sensing unit to perform a sensing function at a first time and a heating function at a second time.

Preferably, the heating and sensing unit is a metal layer. When performing the sensing function, the metal layer forms a capacitance with a portion of a human body located within a sensing area of the metal layer. The detection system acquires capacitance information or capacitance related information through the formed capacitance.

According to a third aspect of the present disclosure, a device is proposed, which is a steering wheel system or seat system including the aforementioned circuit or detection system.

### BRIEF DESCRIPTION OF THE DRAWINGS

Other features and advantages of the present disclosure will be more readily understood through the following preferred embodiments described in detail with reference to the accompanying drawings, in which the same reference numerals indicate the same or similar components.
FIG. 1 illustrates an exemplary block diagram of a circuit according to an embodiment of the present disclosure, which is configured to couple with a heating and sensing unit to control the heating and sensing unit to perform a sensing function at a first time and a heating function at a second time.
FIG. 2 illustrates a circuit diagram of a detection system according to an embodiment of the present disclosure.
FIG. 3 illustrates a schematic diagram of the working principle of the detection system in FIG. 2 when performing the heating function.
FIG. 4 illustrates a schematic diagram of the working principle of the detection system in FIG. 2 when performing the sensing function.

### DETAILED DESCRIPTION

In the prior art, products that integrate heating and sensing functions and use circuits to switch between the heating and sensing functions via time-shared control, such as a steering wheel HOD module integrating the heating function or a seat occupancy detection module integrating the heating function, can cause fluctuations in the Rawdata representing changes in capacitance when the heating function is turned on/off or when other factors cause voltage pulsation in the heating power supply. Such fluctuations pose challenges to the accuracy and reliability of the product's detection function, and may even result in mistriggering of related functions, thereby reducing the driving safety of vehicle.

As described below, some exemplary embodiments of the present disclosure provide a circuit, a detection system, and a device to address the aforementioned issues.

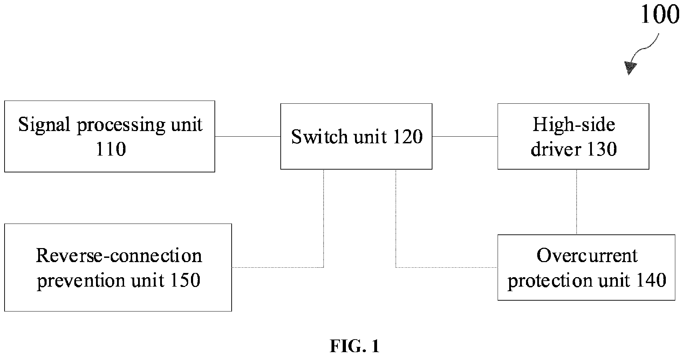

Referring to FIG. 1, a block diagram of a circuit 100 according to an embodiment of the present disclosure is shown. The circuit 100 is configured to couple with a heating and sensing unit to control the heating and sensing unit to perform a sensing function at a first time and a heating function at a second time. As shown in FIG. 1, the circuit 100 includes a signal processing unit 110, a switch unit 120, and a high-side driver 130. A first terminal of the switch unit 120 is grounded, a second terminal of the switch unit is connected to an output terminal of the high-side driver 130, and a third terminal of the switch unit is connected to the signal processing unit 110. When the heating and sensing unit performs the sensing function, the signal processing unit 110 controls the switch unit 120 to be turned on, so as to ground the output terminal of the high-side driver 130.

In some embodiments, the circuit 100 further includes an overcurrent protection unit 140. A first terminal of the overcurrent protection unit 140 is grounded, a second terminal of the overcurrent protection unit is connected to a control terminal of the high-side driver 130, and a third terminal of the overcurrent protection unit is connected to the third terminal of the switch unit 120. The overcurrent protection unit is configured to shut down the output of the high-side driver 130 to implement overcurrent protection when the heating and sensing unit performs the heating function and the switch unit 120 is turned on abnormally.

In some embodiments, the circuit 100 further includes a reverse-connection prevention unit 150 connected in series between the switch unit 120 and the ground. A control terminal of the reverse-connection prevention unit is connected to a switchable power supply. The reverse-connection prevention unit 150 is configured to disconnect in case of reverse connection of the power supply to implement reverse connection prevention.

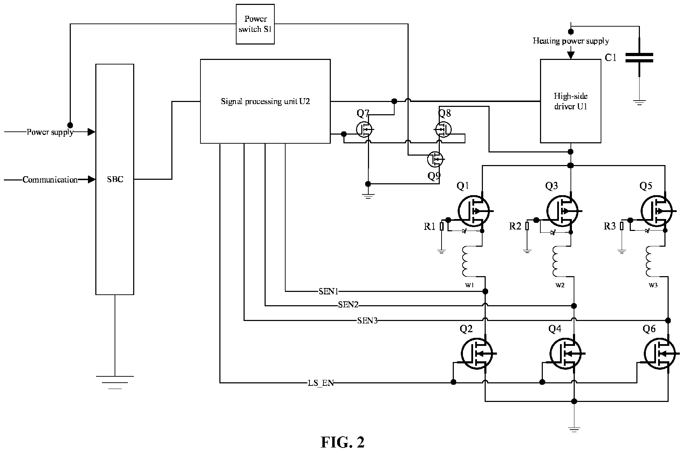

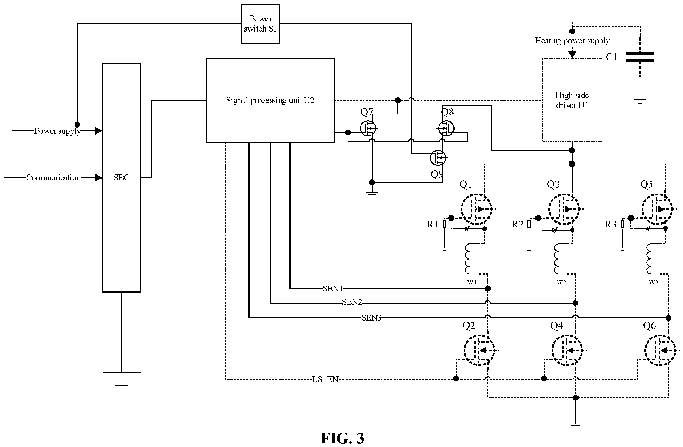

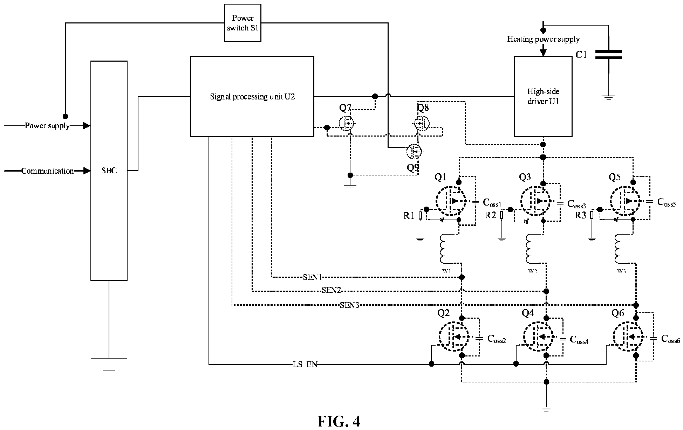

Referring to FIG. 2 to FIG. 4, FIG. 2 illustrates a circuit diagram of a detection system according to an embodiment of the present disclosure, FIG. 3 illustrates a schematic diagram of the working principle of the detection system in FIG. 2 when performing the heating function, FIG. 4 illustrates a schematic diagram of the working principle of the detection system in FIG. 2 when performing the sensing function, where the dashed lines indicate the working circuits performing the corresponding functions. The detection system includes the aforementioned circuit 100, which is configured to couple with a heating and sensing unit to control the heating and sensing unit to perform a sensing function at a first time and a heating function at a second time, and the heating and sensing unit.

In some embodiments, the heating and sensing unit is a metal layer. When performing the sensing function, the metal layer forms a capacitance with a portion of a human body located within a sensing area of the metal layer. The detection system acquires capacitance information or capacitance related information through the formed capacitance.

In some embodiments, the heating and sensing unit is a metal wire or metal mesh (also known as a conductive layer or metal layer), which can be arranged over a large area at desired locations (such as the steering wheel or seats of a vehicle). The metal wire layer or metal mesh layer has two interfaces configured to connect with corresponding interfaces in the circuit 100 respectively. For example, in FIG. 2, the heating and sensing unit consists of three sections of metal wires, w1, w2, and w3, which are used as capacitance detection sensors and heating wires for three zones, respectively.

As shown in FIG. 2, the detection system includes: a signal processing unit U2, a high-side driver U1, a switch unit Q8, and heating and sensing units (w1, w2, and w3). A first terminal (input terminal) of the high-side driver U1 is connected to a heating power supply, a second terminal (control terminal) thereof is connected to the signal processing unit U2, and a third terminal (output terminal) thereof is connected to the heating and sensing unit. A first terminal of the switch unit Q8 is grounded, a second terminal thereof is connected to the output terminal of the high-side driver U1, and a third terminal (control terminal) thereof is connected to the signal processing unit U2. A first terminal of the heating and sensing unit is connected to the high-side driver U 1, and a second terminal thereof is grounded. When the heating and sensing unit performs the sensing function, the signal processing unit U2 controls the switch unit Q8 to be turned on, so as to ground the output terminal of the high-side driver U1. It should be noted that although the heating and sensing unit is exemplified as metal wires w1, w2, and w3 in FIG. 2 for illustration, the present disclosure itself does not impose any limitations on the number of heating and sensing units, sensing channels, or sensing areas.

Optionally, the signal processing unit U2 may be a microcontroller (MCU) integrated with a capacitance detection processing unit, or a discrete architecture consisting of a general-purpose MCU and a separate capacitance detection processing unit. The capacitance detection processing unit is configured to identify and process the capacitance signals obtained when the heating and sensing unit performs the sensing function.

Optionally, the high-side driver U1 is an intelligent high-side power switch that integrates overcurrent protection, overvoltage protection, and other protection features, as well as open-circuit and short-circuit diagnostic functions, and is configured to control the on/off of the heating power supply.

Optionally, the switch unit Q8 may be a metal-oxide-semiconductor field-effect transistor (MOSFET), junction field-effect transistor, power transistor, bipolar junction transistor, or IGBT. Preferably, the switch unit Q8 is a MOSFET, especially an N-type MOSFET, which is beneficial for reducing the number of components required for the product, thereby reducing the production and manufacturing costs. Specifically, during the switching between the heating function and the capacitance detection function, the signal processing unit needs to frequently set the gate of Q8 to high/low level to control the output terminal of the high-side driver to be grounded or not to be grounded. During the heating period, the gate is set to low level and Q8 is turned off. During the sensing period, the gate is set to high level, Q8 is turned on, and the output terminal of the high-side driver is short-circuited to ground, bypassing capacitor C1. This avoids the impact of capacitance changes of C1 caused by voltage changes on capacitance detection.

Optionally, the detection system further includes an overcurrent protection unit Q7. A first terminal of the overcurrent protection unit is grounded, a second terminal thereof is connected to the control terminal of the high-side driver U1, and a third terminal (control terminal) thereof is connected to the third terminal (control terminal) of the switch unit Q8. The overcurrent protection unit is configured to shut down the output of the high-side driver U1 to implement overcurrent protection when the heating and sensing unit performs the heating function but the switch unit Q8 is turned on abnormally, preventing Q8 from being damaged due to overcurrent caused by MCU software logic errors. In some embodiments, the overcurrent protection unit Q7 is a MOSFET. Specifically, during the switching between the heating function and the capacitance detection function, the signal processing unit needs to frequently set the gate of Q8 to high/low level to control the output terminal of the high-side driver to be grounded or not to be grounded. Therefore, to prevent Q8 and Q9 from being damaged due to overcurrent caused by software timing errors that could cause the gate of Q8 to be unexpectedly set to high level during the heating period, Q7 as a hardware protection measure can be added to enhance system stability. Specifically, Q8 and Q7 are controlled via a same control pin of the signal processing unit, so that when the gate of Q8 is abnormally set to high level during the heating period, Q7 acts to pull down the control pin of the high-side driver, thereby shutting down the output of the high-side driver and protecting Q8 and Q9 from being damaged due to overcurrent.

Optionally, the detection system further includes a reverse-connection prevention unit Q9 connected in series between the switch unit Q8 and the ground. A control terminal of the reverse-connection prevention unit is configured to connect to a switchable power supply (for example, connected to the power supply via a power switch S1 as shown in the figures). The reverse-connection prevention unit is configured to disconnect in case of reverse connection of the power supply to implement reverse connection prevention. In some embodiments, the reverse-connection prevention unit Q9 is a MOSFET. Specifically, due to the risk of failure of reverse connection prevention in the circuit with the introduction of Q8, Q9 is further introduced for reverse connection prevention. In some embodiments, the gate of Q9 is controlled by a bipolar junction transistor-controlled switchable power supply. When the power supply is forwardly connected, the bipolar junction transistor-controlled switchable power supply is turned on, the gate voltage is approximately equal to the power supply voltage, Q9 is turned on, and the output of the high-side driver passes through Q8 and then Q9 to the ground. When the power supply is reversely connected, the bipolar junction transistor-controlled switchable power supply is turned off, the gate is at low level, and Q9 is turned off, thus achieving the purpose of reverse connection prevention.

Optionally, the detection system further includes high-side electrical isolation transistors (for example, Q1, Q3, Q5) and low-side electrical isolation transistors (for example, Q2, Q4, Q6). As shown in FIG. 2, the first terminal of each of the heating and sensing units (w1, w2, w3) is connected to the output terminal of the high-side driver U1 through a corresponding high-side electrical isolation transistor (Q1, Q3, Q5), and the second terminal thereof is grounded through a corresponding low-side electrical isolation transistor (Q2, Q4, Q6).

In some embodiments, the high-side electrical isolation transistors and/or the low-side electrical isolation transistors are field-effect transistors. Each high-side electrical isolation transistor is used for high-side electrical isolation of a capacitance acquisition channel in a corresponding zone. Each low-side electrical isolation transistor is used for low-side electrical isolation of the capacitance acquisition channel in a corresponding zone.

In some embodiments, each of the high-side electrical isolation transistors is a P-type field-effect transistor. All of these P-type field-effect transistors are reversely connected to block potential paths via the body diode to the source. A control terminal of each P-type field-effect transistor is grounded via a resistor. In the present embodiment, the control logic is simplified by pulling down the gate of the P-type field-effect transistor, unifying the parasitic circuits of the heating on state and the heating off state to avoid the impact of heating on capacitance acquisition. In the prior art, switching of the on and off states of the heating function can generate noise in the signal of the sensing detection channel (capacitance detection channel). When the heating function is on, the signal processing unit sets the gate of each P-type field-effect transistor (Q1, Q3, and Q5) to high level, thereby enabling the field-effect transistors in the three zones, thus each capacitance detection channel has a parasitic circuit that passes through the body diode of the P-type field-effect transistor to the source, then through the gate-source bridge resistor and the gate current limiting resistor to ground. When the heating function is off and the sensing function is on, each capacitance detection channel has a parasitic circuit that passes through the body diode of the P-type field-effect transistor to the source, then through the gate-source bridge resistor and the gate capacitance to ground. In the two states, the circuit has different parasitic capacitance. Moreover, during the phase when the heating function is turned off and the sensing function is turned on (that is, the capacitance detection channel is working), the discharge of the gate capacitance also causes changes in the parasitic capacitance of the circuit. In summary, the on/off switch of the heating function causes changes in the parasitic capacitance of the capacitance detection channel, thereby interfering with the detection of capacitance changes caused by the target object. In addition, there is also mutual interference among detection results of multiple zones in the prior art (for example, touching one zone may cause interference in several other zones). The present embodiment effectively addresses the aforementioned issues by reversely connecting the P-type field-effect transistor in each zone to block the potential path via the body diode to the source and by grounding the control terminal via a resistor. Therefore, the P-type field-effect transistor does not need to be controlled by the signal processing unit, which simplifies software control logic and does not affect the heating function. Further, the parasitic circuit in the present embodiment remains consistent when the heating function is turned on or off, thereby avoiding the impact of switching between the heating and sensing functions on capacitance detection. Moreover, the presence of body diode enables more thorough electrical isolation among each zone, avoiding mutual interference among detection results of multiple zones.

In some embodiments, the low-side electrical isolation transistor is an N-type field-effect transistor. The control terminal of the N-type field-effect transistor is connected to the signal processing unit U2. When an abnormality occurs in the high-side circuit, the signal processing unit U2 can close the heating path by controlling the low-side electrical isolation transistor to be off, thereby meeting function safety goals.

The detection system includes a plurality of sensing detection channels (SEN1, SEN2, SEN3). Preferably, a sum of an output capacitance (Coss) under a direct current bias voltage of all transistors (for example, Q1 to Q6 in the figures) and other parasitic capacitance in the plurality of sensing detection channels is less than an upper limit of load capacity of the signal processing unit U2. The reasons therefor are as follows. Due to the existence of the output capacitance Coss of the high-side and low-side electrical isolation transistors, during the period when the heating function is turned off and the sensing function is turned on, the Coss of the high-side and low-side electrical isolation transistors are combined, resulting in excessive or even over-limit parasitic capacitance in the sensing detection channels. The larger the Coss of the transistors, the larger the parasitic capacitance of the detection channels, and the smaller the detectable signal quantity. An excessively large Coss of the transistors can cause the total parasitic capacitance of the detection channels to exceed the upper limit of load capacity of a capacitance acquisition drive chip (for example, the recognizable capacitance change limit of AS8579 chip from AMS is 2000pf), resulting in no significant change in the data sensed when touching the steering wheel with a finger or palm. In view of the above, the present disclosure proposes to select a MOSFET with a smaller Coss under the drive signal direct current bias voltage (for example, the direct current bias voltage of AS8579 chip from AMS is Min: 1.18V, Typ: 1.23V, Max: 1.28V) of the signal processing unit (capacitance detection chip), thereby reducing the impact of the transistors' parasitic capacitance on the detectable signal increment.

Further, the sum of the output capacitance under a direct current bias voltage of all transistors in the plurality of sensing detection channels and other parasitic capacitance is less than 60% of the upper limit of load capacity of the signal processing unit U2. The reasons therefor are as follows. Based on the characteristic that capacitance increases at high temperatures and practical experience, controlling the parasitic capacitance below 60% of the upper limit can effectively reduce the impact of ambient temperature on detection results and improve detection accuracy. With the same external factors, the smaller the output capacitance Coss of the transistors in the detection channels, the smaller the total parasitic capacitance on the capacitance detection channels, which is more conducive to improving the signal quantity in the detection channels and improving detection accuracy.

Optionally, the detection system may further include a system base chip (SBC). SBC integrates basic chips such as a low dropout regulator (LDO), a transceiver, and a watchdog, provides functions such as power supply for the signal processing unit U2, CAN or LIN transceiving, and external watchdog monitoring, and has advantages such as high system integration, low cost, and small PCB space occupation. In some other embodiments, SBC may also be implemented using a discrete IC architecture that can achieve the aforementioned functions.

Referring to FIG. 3, the working principle of the detection system that is performing the heating function is described as follows. During this period, the three capacitance detection channels SEN1, SEN2, and SEN3 are closed, Q7 and Q8 are turned off because the gate thereof is set to low level by U2, Q9 is turned on but has not practical effect because Q8 is turned off, U1 is turned on due to the control of the corresponding pin of U2, P-channel MOSFETs Q1, Q3, and Q5 are turned on because the source thereof obtains high voltage via the body diode thereof and VGS is therefore less than the conduction threshold, and N-channel MOSFETs Q2, Q4, and Q6 are turned on because the control pin LS_EN of U2 is set to high level. Therefore, the circuit from the heating power supply, via U1, Q1, W1, and Q2, to ground forms the heating circuit of the first zone; the circuit from the heating power supply, via U1, Q3, W2, and Q4, to ground forms the heating circuit of the second zone; and the circuit from the heating power supply, via U1, Q5, W3, and Q6, to ground forms the heating circuit of the third zone. It should be noted that there is no need to divide zones for performing the heating function. However, due to the need for HOD in the three zones, the three sections of metal wires cannot be electrically connected, so the heating function need to be performed in the three zones. In fact, the heating function in the three zones is turned on and off simultaneously.

Referring to FIG. 4, the working principle of the detection system that is performing the sensing function is described as follows. During this period, the three capacitance detection channels SEN1, SEN2, and SEN3 are opened, Q7 and Q8 are turned on because the gate thereof is set to high level by U2, U1 is turned off because the corresponding pin of U2 is set to low level or is pulled down because Q7 is turned on, the output terminal of U1 is short-circuited to ground, the P-channel MOSFETs Q1, Q3, and Q5 cannot meet the conduction conditions and are therefore turned off, the N-channel MOSFETs Q2, Q4, and Q6 are turned off because the control pin LS_EN of U2 is set to low level. Therefore, the parasitic capacitance of the capacitance detection channel SEN1 is equivalent to: Coss1 + Coss2 + Cp1 (capacitance of TVS and other components) + Cp2 (parasitic capacitance of wiring), where Coss1 + Coss2 >> Cp1 + Cp2; the parasitic capacitance of the capacitance detection channel SEN2 is equivalent to: Coss3 + Coss4 + Cp3 (capacitance of TVS and other components) + Cp4 (parasitic capacitance of wiring), where Coss3 + Coss4 >> Cp3 + Cp4; and the parasitic capacitance of the capacitance detection channel SEN3 is equivalent to: Coss5 + Coss6 + Cp5 + Cp6, where Coss5 + Coss6 >> Cp5 + Cp6. Therefore, selecting a MOSFET with a smaller Coss under the direct current bias voltage can reduce the parasitic capacitance and improve the signal quality.

Another embodiment of the present disclosure proposes a device, which may be a steering wheel system including the aforementioned circuit 100 or detection system, or a seat system including the aforementioned circuit 100 or detection system.

It should be noted that the present invention (such as the inventive concept, etc.) has been described in the specification of this patent document and/or illustrated through the drawings of this patent document based on exemplary embodiments; the embodiments of the present invention are presented merely by way of example and are not intended to limit the scope of the present invention. The structure and/or arrangement of the elements of the inventive concept reflected in the present invention, as described in the specification and/or illustrated in the drawings, are merely illustrative. Although the exemplary embodiments of the present invention have been described in detail in this patent document, those skilled in the art can readily understand that equivalents, modifications, variations, etc. of the subject matter of the exemplary embodiments and alternative embodiments are possible and are considered to be within the scope of the present invention; all these subject matters (such as modifications, variations, embodiments, combinations, equivalents, etc.) are intended to be included within the scope of the present invention. It should also be noted that various/other modifications, variations, substitutions, equivalents, alterations, omissions, etc. can be made in the configuration and/or arrangement of the exemplary embodiments (e.g., in terms of concept, design, structure, device, form, assembly, construction, means, function, system, process/method, steps, sequence of process/method steps, operation, operating conditions, performance, material, composition, combination, etc.) without deviating from the scope of the present invention; all these subject matters (such as modifications, variations, embodiments, combinations, equivalents, etc.) are intended to be included within the scope of the present invention. The scope of the present invention is not intended to be limited to the subject matter (such as details, structures, functions, materials, behaviors, steps, sequences, systems, results, etc.) described in the specification and/or drawings of this patent document. Considering that the claims of this patent document shall be appropriately interpreted to cover the full scope of the subject matter of the present invention (including, for example, any and all such modifications, variations, embodiments, combinations, equivalents, etc.). It should be understood that the terms used in this patent document are intended to provide a description of the subject matter of the exemplary embodiments, rather than as limitations on the scope of the present invention.

It should also be noted that, according to exemplary embodiments, the present invention may include conventional technologies (such as technologies implemented and/or integrated in exemplary embodiments, modifications, variations, combinations, equivalents), or may include any other applicable technologies (present and/or future), with the ability to perform the functions and processes/operations described in the specification and/or illustrated in the drawings. All these technologies (such as those realized through embodiments, modifications, variations, combinations, equivalents, etc.) are considered to fall within the scope of the invention described in this patent document.

## Claims

1. A circuit, configured to couple with a heating and sensing unit to control the heating and sensing unit to perform a sensing function at a first time and a heating function at a second time, the circuit comprising:
a high-side driver, a signal processing unit, and a switch unit,
wherein a first terminal of the switch unit is grounded, a second terminal of the switch unit is connected to an output terminal of the high-side driver, and a third terminal of the switch unit is connected to the signal processing unit, and wherein when the heating and sensing unit performs the sensing function, the signal processing unit controls the switch unit to be turned on, so as to ground the output terminal of the high-side driver.

2. The circuit according to claim 1, further comprising:
an overcurrent protection unit,
wherein a first terminal of the overcurrent protection unit is grounded, a second terminal of the overcurrent protection unit is connected to a control terminal of the high-side driver, and a third terminal of the overcurrent protection unit is connected to the third terminal of the switch unit, and wherein the overcurrent protection unit is configured to shut down output of the high-side driver to implement overcurrent protection when the heating and sensing unit performs the heating function but the switch unit is turned on abnormally.

3. The circuit according to claim 1, further comprising:
a reverse-connection prevention unit connected in series between the switch unit and the ground,
wherein a control terminal of the reverse-connection prevention unit is configured to connect to a switchable power supply, and wherein the reverse-connection prevention unit is configured to disconnect in case of reverse connection of the power supply to implement reverse connection prevention.

4. The circuit according to any one of claims 1 to 3, wherein the switch unit, the overcurrent protection unit, and/or the reverse-connection prevention unit are metal-oxide-semiconductor field-effect transistors.

5. The circuit according to claim 1, further comprising:
a plurality of sensing detection channels, each of which comprises a high-side electrical isolation transistor and a low-side electrical isolation transistor,
wherein a sum of an output capacitance under a direct current bias voltage of all transistors and other parasitic capacitance in the plurality of sensing detection channels is less than an upper limit of load capacity of the signal processing unit.

6. The circuit according to claim 5, wherein the sum of the output capacitance under the direct current bias voltage of all transistors and other parasitic capacitance in the plurality of sensing detection channels is less than 60% of the upper limit of load capacity of the signal processing unit.

7. The circuit according to claim 5, wherein each of the high-side electrical isolation transistors is a P-type field-effect transistor, all of the P-type field-effect transistors are reversely connected to block potential paths via a body diode thereof to a source thereof, and a control terminal of each P-type field-effect transistor is grounded via a resistor.

8. The circuit according to claim 5, wherein each of the low-side electrical isolation transistors is an N-type field-effect transistor, and a control terminal of each N-type field-effect transistor is connected to the signal processing unit.

9. The circuit according to claim 1, wherein the switch unit is an N-type field-effect transistor.

10. A detection system, comprising the circuit according to any one of claims 1 to 9 and a heating and sensing unit coupled to the circuit, wherein the circuit controls the heating and sensing unit to perform a sensing function at a first time and a heating function at a second time.

11. The detection system according to claim 10, wherein the heating and sensing unit is a metal layer, and wherein when performing the sensing function, the metal layer forms a capacitance with a portion of a human body located within a sensing area of the metal layer, and the detection system acquires capacitance information or capacitance related information through the formed capacitance.

12. A device, which is a steering wheel system or a seat system comprising the circuit according to any one of claims 1 to 9 or the detection system according to any one of claims 10 to 11.
